# EUROPÄISCHE PATENTSCHRIFT

(11) **EP 0 943 899 B1**
(45) Veröffentlichungstag und Bekanntmachung des Hinweises auf die Patenterteilung: **31.05.2006**
(21) Anmeldenummer: 99104834.9
(22) Anmeldetag: 11.03.1999
(51) Int. Cl.: G01F 1/684, G01K 1/06

(54) **Messgerät**
Measuring apparatus
Appareil de mesure

(30) Priorität: 19.03.1998 DE 19812027
(43) Veröffentlichungstag der Anmeldung: 22.09.1999
(73) Patentinhaber: TESTO GmbH & Co., 79853 Lenzkirch (DE)
(72) Erfinder: Derr, Andreas, 79793 Wutöschingen-Degernau (DE)
(74) Vertreter: Patentanwälte Westphal, Mussgnug & Partner

(56) Entgegenhaltungen:
- DE-A- 3 020 095
- NL-A- 8 102 690
- US-A- 4 522 270

## Beschreibung

Die vorliegende Erfindung betrifft ein Messgerät gemäß den Merkmalen des Oberbegriffs des Anspruchs 1.

Derartige Messgeräte sind beispielsweise für die Temperaturmessung bekannt, wobei ein Temperatursensor in der Spitze einer sich von der Anzeige- und/oder Bedieneinheit wegerstrekkenden Messnadel angeordnet ist. Zur besseren Ablesbarkeit eines den ermittelten Temperaturwert anzeigenden Displays an der Anzeige- und/oder Bedieneinheit ist letzteres gegenüber der Nadel schwenkbar gelagert. Derartige Messgeräte besitzen gegenüber ebenfalls bekannten Messgeräten, bei denen eine Meßsonde über ein Kabel an eine Anzeige- und/oder Bedieneinheit angeschlossen ist, den Vorteil einer einhändigen Bedienbarkeit.

Eine Verwendung derartiger einstückiger Messgeräte zur Strömungsmessung scheiterte bislang daran, daß zur Strömungsmessung in unterschiedlichen Kanaltiefen ein langer Schaft vorzusehen ist, der sich insbesondere beim Transport als unhandlich und zerstörungsanfällig erweist.

Ziel der vorliegenden Erfindung ist es daher, ein einhändig zu bedienendes Messgerät zur Verfügung zu stellen, mit dem auch Strömungsmessungen in größeren Kanaltiefen möglich sind, und welches einfach zu transportieren und zu bedienen ist, so daß sich insbesondere die oben genannten Nachteile nicht ergeben.

Diese Aufgabe wird durch ein Messgerät gemäß den Merkmalen des Anspruchs 1 gelöst.

Danach besitzt das Messgerät wenigstens einen abklappbaren Schaftabschnitt, wodurch der Schaft nach Beendigung des Meßeinsatzes auf eine handliche Größe zusammenklappbar und das Messgerät einfach und ohne große Gefahr eines Schaftbruches zu transportieren ist.

Vorteilhafte Ausgestaltungen der Erfindung sind Gegenstand der Unteransprüche.

Nach einer Ausführungsform der Erfindung ist vorgesehen, ein Batteriefach in den Schaft zu integrieren. Bereits bei einem Schaftdurchmesser, der geringfügig über dem Durchmesser einer 1,5 V Batterie liegt, können so eine Anzahl Batterien hintereinanderliegend in dem Schaft untergebracht werden, wodurch eine ausreichend große und lang anhaltende Spannungsversorgung der Anzeige- und/oder Bedieneinheit und des Sensorelements gewährleistet ist. Diese Ausführungsform mit integriertem Batteriefach im Schaft bietet gegenüber bekannten einhändigen Messgeräten, bei denen das Batteriefach in der Anzeige- und/oder Bedieneinheit untergebracht ist, den Vorteil, daß umweltfreundliche Akkus zur Spannungsversorung verwendet werden können, während bei den bekannten Messgeräten aus Platzgründen und in dem Bestreben, die Anzeige- und/oder Bedieneinheit möglichst klein zu halten, nicht-wiederaufladbare Knopfzellen verwendet werden müssen.

Vorzugsweise weist das Batteriefach eine aus einer stirnseitigen Richtung des Schaftes zugängliche Zuführöffnung auf. Die Batterien werden bei dieser Ausführungsform nacheinander durch die Zuführöffnung in das Batteriefach eingeführt, wobei die Zuführöffnung bei dieser Ausführungsform lediglich eine Größe aufweist, die etwas über der Batteriequerschnittsfläche liegt, wodurch die Zuführöffnung aufgrund der geringen Größe gegebenenfalls einfach abzudichten ist.

Zum Öffnen und Schließen der Zuführöffnung des als Hohlraum in dem Schaft ausgebildeten Batteriefaches ist vorgesehen, daß ein an das Batteriefach anschließender Schaftbereich lösbar mit dem das Batteriefach aufnehmenden Schaftbereich verbunden ist. Der das Batteriefach aufnehmende Schaftbereich und der daran anschließende Schaftbereich sind vorzugsweise mittels eines Scharniers zur Freigabe der Zuführöffnung auseinanderklappbar, wobei im zusammengeklappten Zustand die beiden Schaftbereiche mittels einer Sicherungshülse bajonettartig miteinander verriegelt sind.

Die Anzeige- und/oder Bedieneinheit ist vorzugsweise mittels eines ersten Gelenkes drehbar an dem Schaft gelagert, wobei das erste Gelenk einen Rastmechanismus aufweist, der nur eine vorgegebene Winkelstellung der Anzeige- und/oder Bedieneinheit gegenüber dem Schaft erlaubt. Der Rastmechanismus verhindert auf einfache und sichere Weise ein unbeabsichtigtes Verstellen der Anzeige- und/oder Bedieneinheit gegenüber dem Schaft.

Zur Verwendung des Messgerätes als Strömungsmessgerät ist vorgesehen, das Sensorelement als Hitzdrahtelement auszubilden und im Bereich des unteren Schaftendes in einem vertikal zur Schaftachse verlaufenden Durchströmungskanal anzuordnen. Alternativ oder zusätzlich ist vorgesehen, ein Thermoelement zur Temperaturmessung in dem Durchströmungskanal oder an der unteren Schaftspitze anzuordnen.

Der den Durchströmungskanal aufweisende Schaftbereich ist gemäß einer weiteren Ausführungsform der Erfindung um die Schaftachse drehbar gelagert, um den Durchströmungskanal in Strömungsrichtung des zu messenden Mediums ausrichten zu können, ohne die Position der Anzeige- und/oder Bedieneinheit ändern zu müssen.

Gemäß einer weiteren Ausführungsform der Erfindung ist zum Abklappen des wenigstens einen Schaftabschnitts ein zweites Gelenk vorgesehen, das ein erstes und zweites Scharnier aufweist, die jeweils um maximal 90° abklappbar sind und die einen gemeinsamen in axialer Schaftrichtung verlaufenden Scharniersteg aufweisen. Vorzugsweise weisen beide Scharniere einen Rastmechanismus auf, der ein Einrasten der Scharniere wenigstens in O°- und 90°-Winkelstellung ermöglicht. Der abklappbare Schaftabschnitt ist damit sowohl in ausgeklapptem als auch in eingeklapptem Zustand gegen unbeabsichtigtes Zusammen- oder Auseinanderklappen gesichert.

Eine Leitungsverbindung zwischen dem Sensorelement und der Anzeige- und/oder Bedieneinheit bzw. dem Batteriefach verläuft vorzugsweise durch die Gelenkachsen der beiden Scharniere, wodurch bei Zusammenklappen des Schaftes durch Abklappen der beiden Scharniere keine Zugbelastung der Leitungsverbindung auftritt. Auf einen aufwendigen Mechanismus zum Längenausgleich der Leitungsverbindung kann somit verzichtet werden.

Des weiteren ist vorgesehen, im Bereich des Sensorelements eine um die Schaftachse drehbare Schützhülse vorzusehen, die diametral gegenüberliegende Öffnungen für den Durchströmungskanal aufweist. Die Schutzhülse, die unverlierbar mit dem Schaft verbunden ist, gibt durch Drehung in eine entsprechende Position den Durchströmungskanal für Messungen frei und verschließt in einer anderen Position den Durchströmungskanal, um das Sensorelement, beispielsweise während des Transports, vor Beschädigung oder Verschmutzung zu schützen.

Vorteilhafte Ausgestaltungen der Erfindung werden nachfolgend anhand von Ausführungsbeispielen in Figuren näher erläutert.
Es zeigen:
- Fig. 1: erfindungsgemäßes Messgerät mit abklappbarem Schaft in betriebsbereitem Zustand;
- Fig. 2: erfindungsgemäßes Messgerät mit abgeklapptem Schaft;
- Fig. 3: Detaildarstellung des Gelenkmechanismus zum Schwenken der Anzeige- und/oder Bedieneinheit gegenüber dem Schaft;
- Fig. 4: Detaildarstellung des am Schaft angeordneten Gelenkkopfes;
- Fig. 5: Schnittdarstellung des Gelenkkopfes gemäß Fig. 4;
- Fig. 6: perspektivische Darstellung der Anzeige- und/oder Bedieneinheit und des Gelenkkopfes während der Montage;
- Fig. 7: Schnittdarstellung des Gelenkmechanismus zum Abklappen des Schaftes;
- Fig. 8: erfindungsgemäßes Messgerät bei geöffnetem Batteriefach;
- Fig. 9: Detaildarstellung des das Sensorelement enthaltenden Schaftbereiches.

In den Figuren bezeichnen, sofern nicht anders angegeben, gleiche Bezugszeichen gleiche Teile mit gleicher Bedeutung.

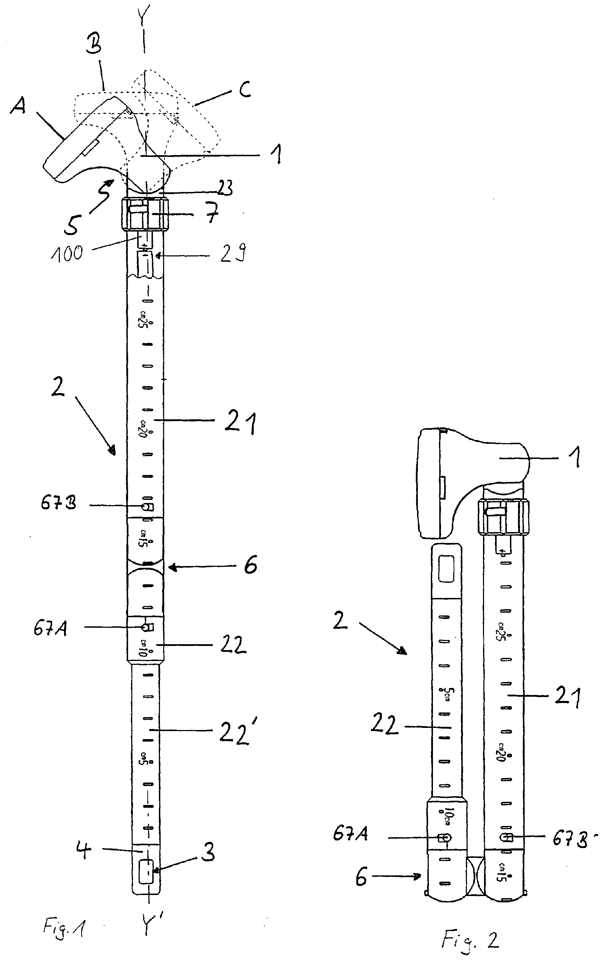

Fig. 1 zeigt ein erfindungsgemäßes Messgerät mit einer Anzeige- und/oder Bedieneinheit 1, die mittels eines in Fig. 1 nicht näher dargestellten Gelenks 5 gegenüber einem Schaft 2 schwenkbar gelagert ist. Fig. 1 zeigt beispielhaft drei verschiedene Schwenkstellungen A, B, C der Anzeige- und/oder Bedieneinheit, wobei letztere für die Schwenkstellungen B, C gestrichelt dargestellt ist.

Der Schaft 2 weist einen oberen Schaftabschnitt 21 und einen mittels eines Gelenks 6 gegenüber dem oberen Schaftabschnitt 21 abklappbaren unteren Schaftabschnitt 22 auf. Das in dem dargestellten Beispiel zum Messen von Strömungen ausgebildete Messgerät weist im unteren Schaftabschnitt 22 einen Durchströmungskanal 3 auf, in dem, wie aus der Detaildarstellung in Fig. 9 hervorgeht, ein Hitzdrahtelement 31 zur Strömungsmessung und ein Thermoelement 32 zur Temperaturmessung angeordnet sind. Im Bereich des Durchströmungskanals 3 ist eine um die Schaftachse Y-Y' verdrehbare Schutzhülse 4 angeordnet, die gegenüberliegende Öffnungen 41 aufweist, um je nach Position den Durchströmungskanal 3 freizugeben oder, wie in Fig. 9b dargestellt, zu verschließen, um die Sensorelemente 31, 32 beispielsweise während des Transports vor Beschädigung zu schützen.

Ein den Durchströmungskanal 3 bzw. die Sensorelemente 31, 32 aufweisender Schaftabschnitt 22' des unteren Schaftabschnitts 22 ist gegenüber dem oberen Schaftabschnitt 21 um die Schaftachse Y-Y' drehbar gelagert. Dies ermöglicht ein Ausrichten des Durchströmungskanals 3 auf die zu messende Strömung des Mediums unter Beibehaltung der eingestellten Position der Anzeige- und/oder Bedieneinheit 1, die gegenüber dem oberen Schaftabschnitt 21 lediglich um eine senkrecht zur Schaftachse Y-Y' verlaufende Schwenkachse schwenkbar, jedoch nicht um die Schaftachse Y-Y' drehbar, gelagert ist.

Das dargestellte erfindungsgemäße Messgerät erlaubt eine Strömungsmessung in unterschiedlichen Kanaltiefen bei einhändiger Bedienbarkeit, wobei zum Ablesen der Messtiefe am Umfang des Schaftes 2 eine Längenskala angebracht ist. Der Schaft 2 ist nach Beendigung der Messung wie in Fig. 2 dargestellt zusammenklappbar und ermöglicht so einen einfachen und sicheren Transport des Messgeräts. Die Transporthöhe des Messgerätes wird durch maximales Schwenken der Anzeige- und/oder Bedieneinheit 1 reduziert, wie Fig. 2 zeigt.

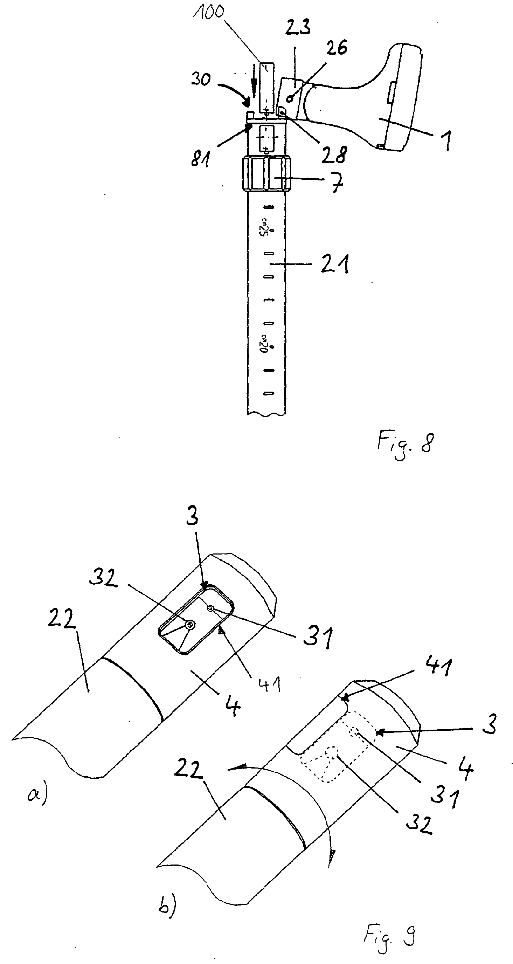

Ein als Hohlraum im oberen Schaftabschnitt 21 ausgebildetes Batteriefach 29 ermöglicht die Aufnahme mehrerer, im Batteriefach 29 hintereinander angeordneter Batterien 100. Das Batteriefach 29 besitzt eine in stirnseitiger Schaftrichtung zugängliche Zuführöffnung 30 zum Einführen der Batterien 100 in das Batteriefach 29. Zum Öffnen der Zuführöffnung 30 ist ein sich an das Batteriefach 29 anschließender Abschnitt 23 des oberen Schaftabschnitts 21 lösbar mit dem das Batteriefach 29 aufnehmenden Schaftabschnitt verbunden. Die lösbare Verbindung ist durch einen Bajonettverschluß realisiert, der eine Sicherungshülse 7 aufweist, die in geschlossenem Zustand an einem ringförmigen Absatz 81 des das Batteriefach 29 aufnehmenden Schaftabschnitts anliegt und mittels einer radial verlaufenden Nut 71 eine Nase 26 des anschließenden Schaftabschnitts 23 sichert, um den das Batteriefach 29 aufnehmenden Schaftabschnitt und den anschließenden Schaftabschnitt 23 miteinander zu verbinden. Im gelösten Zustand der Sicherungshülse 7 ist, wie in Fig. 8 dargestellt, der anschließende Schaftabschnitt 23 mittels eines Scharniers 28 an dem Schaft 2 gesichert.

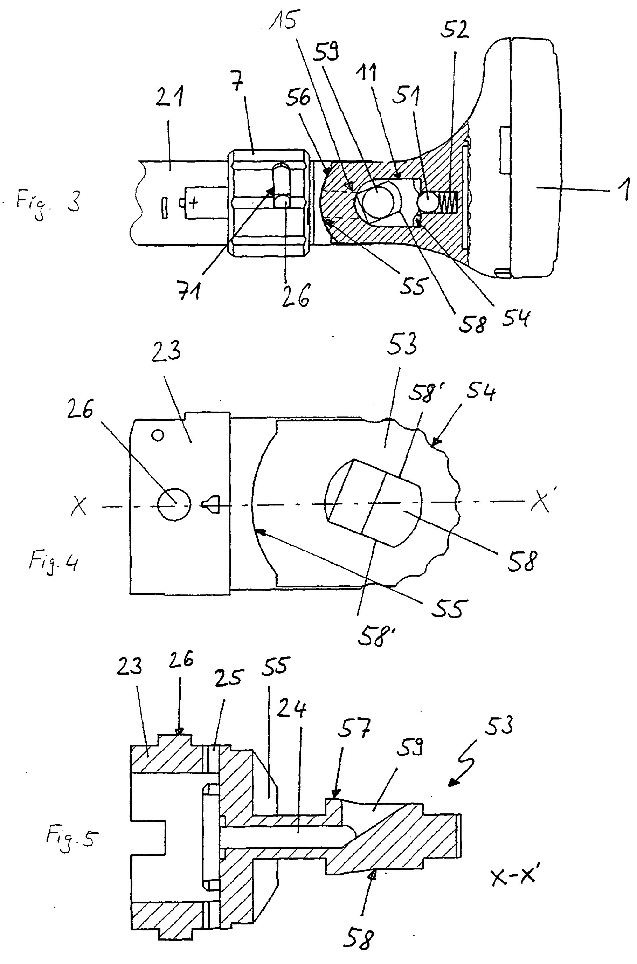

Aufbau und Funktionsweise des ersten Gelenks 5, welches zum Schwenken der Anzeige- und/oder Bedieneinheit 1 gegenüber dem Schaft 2 dient, soll im folgenden anhand der Figuren 3 bis 6 erläutert werden, wobei Fig. 5 eine Schnittdarstellung entlang der in Fig. 3 eingezeichneten, senkrecht zur Zeichenebene verlaufenden Schnittfläche X-X' zeigt. Das Gelenk 5 weist einen Gelenkkopf 53 auf, der Teil des das Batteriefach 29 abschließenden Schaftabschnittes 23 ist. Der Gelenkkopf 53 ist als Flachstück mit einem halbkreisförmig verlaufenden Umfangsabschnitt ausgebildet, der Rastnuten 54 aufweist. Nach beiden Seiten der Oberfläche des Flachstücks erstreckt sich ein Gelenkbolzen 58, der im wesentlichen zylinderförmig mit zwei parallel verlaufenden Abflachungen 58' an der Mantelfläche des Gelenkbolzens 58 ausgebildet ist. Eine kreisförmige Leitungsöffnung 59 an einer Stirnseite des Gelenkbolzens 58 mündet in einen Leitungskanal 24 im Inneren des Gelenkkopfes 53.

Fig. 3 zeigt eine teilweise Schnittdarstellung der Anzeige- und/oder Bedieneinheit 1, aus der die Position und Funktionsweise des Gelenkkopfes 53 bei zusammengeklapptem Gelenk deutlich wird. Die Anzeige- und/oder Bedieneinheit 1 weist eine Aussparung 11 auf, an deren Seitenflächen der Gelenkbolzen 58 anliegt. In einer sich von der Aussparung 11 wegerstreckenden zylinderförmigen Ausnehmung sind eine Feder 52 und eine Kugel 51 angeordnet, wobei die Kugel 51 durch die Feder 52 in Richtung des die Rastnuten 54 aufweisenden Umfangsabschnittes des Gelenkkopfes 53 gedrückt wird. Die Abmessungen der Rastaussparungen 54 sind an die Abmessungen der Kugel 51 angepaßt, wodurch die Kugel 51 bei Schwenken der Anzeige- und/oder Bedieneinheit in aufeinander abfolgende Rastaussparungen 54 einrastet und so die Schwenkstellungen der Anzeige- und/oder Bedieneinheit 1 vorgibt. In zusammengesetztem Zustand liegen eine konkave Druckfläche 55 des Gelenkschaftes 53 und eine konvexe Druckfläche 56 der Anzeige- und/oder Bedienheinheit aneinander an.

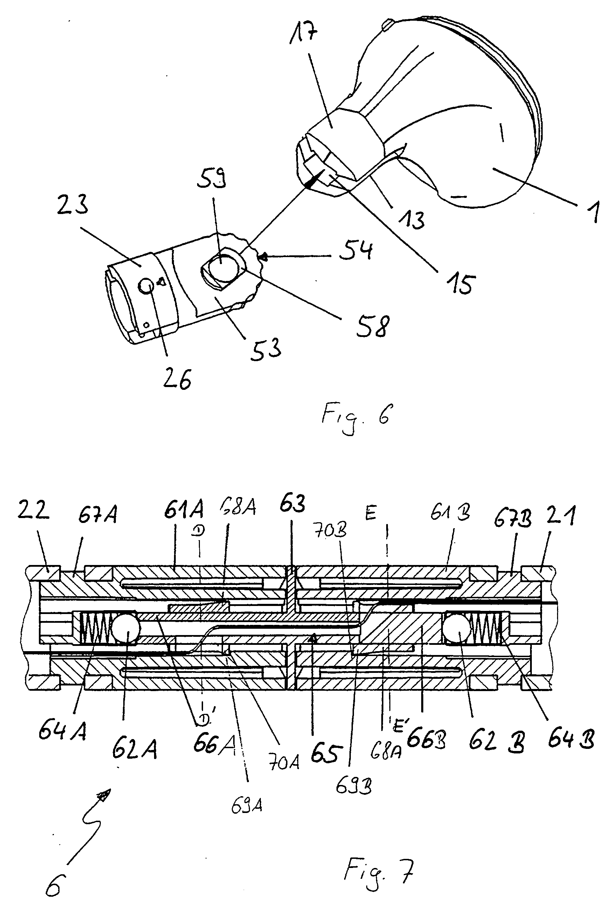

Das Zusammenfügen des Schaftes mit dem Gelenkopf 53 und der Anzeige- und/oder Bedieneinheit 1 wird insbesondere aus Fig. 6 deutlich. Die Anzeige- und/oder Bedieneinheit 1 besitzt einen Schaftabschnitt 17 mit einem Zuführkanal 15, dessen Abmessungen an den Gelenkbolzen 58' angepaßt sind, wobei die Breite des Kanals dem Abstand der Abflachungen 58' des Gelenkbolzens 58 entspricht. Der Gelenkbolzen 58 kann über den Kanal 15, wie in Fig. 3 dargestellt, in die Aussparung 11 der Anzeige- und/oder Bedieneinheit 1 eingeführt werden, wobei der Gelenkbolzen 58 mittels eines Rastvorsprungs 57 in die Aussparung 11 einrastet, um so ein Herausziehen des Gelenkbolzens 58 zu verhindern, wenn sich die Anzeige- und/oder Bedieneinheit 1 genau in dieser Schwenkstellung befindet. In den übrigen Schwenkstellungen ist ein Herausziehen des Gelenkkopfes 53 aus dem Schaftabschnitt 17 nicht möglich, da der Gelenkbolzen 58 den Zuführkanal 15 in der Aussparung 11 hinterschneidet, wie insbesondere aus Fig. 3 deutlich wird.

Fig. 7 zeigt eine Schnittdarstellung des zweiten Gelenks 6 zum Abklappen des Schaftes 2. Das Gelenk 6 ist im wesentlichen aus zwei Scharnieren aufgebaut, die entsprechend dem in den Figuren 3 bis 6 dargestellten Gelenk 5 zum Schwenken der Anzeige- und/oder Bedieneinheit 1 funktionieren. Aus Gründen der Übersichtlichkeit sind übereinstimmende Bestandteile der beiden Scharniere mit gleichen Bezugsziffern bezeichnet, denen zur Unterscheidung die Buchstaben A und B angefügt sind. Die beiden Scharniere besitzen jeweils eine Scharniergabel 61A, 61B, die fest mit dem oberen und unteren Schaftabschnitt 21, 22 verbunden ist. Die Verbindung zwischen den Schaftabschnitten 21, 22 und den Scharniergabeln 61A, 61B erfolgt nach Art eines Bajonettmechanismus, wobei die Schaftabschnitte 21, 22 in radialer Richtung verlaufende Aussparungen aufweisen, die an Nasen 67A, 67B der Scharniergabeln 61A, 61B angreifen.

Die beiden Scharniergabeln 61A, 61B sind durch einen gemeinsamen Scharniersteg 63 zugfest miteinander verbunden, wobei der Scharniersteg 63 gegenüberliegende Gelenkköpfe 66A, 66B aufweist, wobei jeder Gelenkkopf 66A, 66B einen Scharnierbolzen 68A, 68B besitzt, wobei jeweils ein Rastvorsprung 69A, 69B der Gelenkbolzen 68A, 68B mit Rastrücksprüngen 70A, 70B der Scharniergabeln 61A, 61B korrespondiert, um so ein Herausziehen der Gelenkköpfe 66A, 66B aus Ausnehmungen der Scharniergabeln 61A, 61B zu verhindern. In zylinderförmigen Aussparungen der Scharniergabeln 61A, 61B sind Federn 64A, 64B und Kugeln 62A, 62B angeordnet, wodurch die Kugeln 62A, 62B in Richtung der Gelenkköpfe 66A, 66B gedrückt werden, um in dort vorgesehene Rastaussparungen einzugreifen.

Die Gelenkköpfe 66A, 66B weisen jeweils wenigstens zwei Rastaussparungen auf, wodurch jedes der Scharniere wenigstens in einer 0°-Winkelstellung und einer 90°-Winkelstellung einrastbar ist. Die Gelenkachsen der beiden Scharniere sind in Fig. 7 durch die gestrichelten Linien D-D' und E-E' dargestellt. Eine Leitungsverbindung 9, die eine elektrische Verbindung zwischen den Sensorelementen 31, 32 und den Batterien 100 bzw. der Anzeige- und/oder Bedieneinheit herstellt, verläuft, wie in Fig. 7 dargestellt, durch die Gelenkachsen, wodurch ein aufwendiger Längenausgleich der Leitungsverbindung 9 nicht erforderlich ist. Aufgrund der dargestellten doppelten S-Führung der Leitungsverbindung 9 durch das Gelenk ist ein erforderlicher geringer Längenausgleich der Leitungsverbindung 9 bei Abklappen des Schaftes 2 problemlos möglich.

### Bezugszeichenliste

- A, B, C: Stellungen der Anzeige- und/oder Bedieneinheit
- D-D', E-E': Gelenkachsen
- X-X': Schnittfläche
- Y-Y': Schaftachse

- 1: Anzeige- und/oder Bedieneinheit
- 2: Schaft
- 3: Durchströmungskanal
- 4: Schutzhülse
- 5: erstes Gelenk
- 6: zweites Gelenk
- 7: Verschlußhülse
- 9: Leitungsverbindung
- 11: Aussparung
- 13: Schlitz
- 15: Einführkanal
- 17: Schaft der Anzeige- und/oder Bedieneinheit
- 21: oberer Schaftabschnitt
- 22: unterer Schaftabschnitt
- 22': drehbarer Schaftabschnitt
- 23: an das Batteriefach anschließender Schaftabschnitt
- 24: Leitungskanal
- 26: Nase
- 28: Scharnier
- 29: Batteriefach
- 30: Zuführöffnung des Batteriefachs
- 31: Hitzdrahtsonde
- 32: Temperatursensor
- 41: Öffnung der Schutzhülse
- 51: Kugel
- 52: Feder
- 53: Gelenkkopf
- 54: Rastnuten
- 55: Druckfläche des Gelenkkopfs
- 56: Druckfläche der Anzeige- und/oder Bedieneinheit
- 57: Rastvorsprung
- 58: Gelenkbolzen
- 58': Abflachungen des Gelenkbolzens
- 59: Leitungszuführung
- 61A, 61B: Scharniergabeln
- 62A, 62B: Kugeln
- 63: Scharniersteg
- 64A, 64B: Federn
- 65: Leitungskanal
- 66A, 66B: Gelenkköpfe
- 67A, 67B: Arretiernasen
- 71: radial verlaufende Nut
- 81: ringförmiger Ansatz
- 100: Batterie

## Patentansprüche

1. Messgerät mit einem Schaft (2), der ein Sensorelement (31, 32) aufnimmt, und einer an einem oberen Ende des Schaftes (2) angeordneten Anzeige- und/oder Bedieneinheit (1), die mit dem Sensorelement (31, 32) in thermisch oder elektrisch leitender Verbindung steht, und die gegenüber dem Schaft (2) schwenkbar gelagert ist, **dadurch gekennzeichnet, daß** der Schaft (2) wenigstens einen abklappbaren Schaftabschnitt (22) aufweist.

2. Messgerät nach Anspruch 1, **dadurch gekennzeichnet, daß** ein Batteriefach (29) in den Schaft (2) integriert ist.

3. Messgerät nach Anspruch 2, **dadurch gekennzeichnet, daß** das Batteriefach (29) eine aus einer stirnseitigen Richtung des Schaftes zugängliche Zuführöffnung (30) aufweist.

4. Messgerät nach Anspruch 2 oder 3, **dadurch gekennzeichnet, daß** ein an das Batteriefach (29) anschließender Schaftbereich (23) lösbar mit dem das Batteriefach (29) aufnehmenden Schaftbereich (21) verbunden ist, um bei gelöster Verbindung die Zuführöffnung (30) freizugeben.

5. Messgerät nach Anspruch 4, **dadurch gekennzeichnet, daß** die lösbare Verbindung als Bajonettverschluß (7, 71, 26; 81) ausgebildet ist.

6. Messgerät nach einem der vorangehenden Ansprüche, **dadurch gekennzeichnet, daß** die Anzeige- und/oder Bedieneinheit (1) mittels eines ersten Gelenks (5) schwenkbar gelagert ist, das einen Rastmechanismus (51, 52, 54) aufweist, der nur vorgegebene Winkelstellungen der Anzeige- und/oder Bedieneinheit (1) gegenüber dem Schaft (2) erlaubt.

7. Messgerät nach einem der vorangehenden Ansprüche, **dadurch gekennzeichnet, daß** das Sensorelement (31, 32) als Hitzdrahtelement (31) ausgebildet und im Bereich des unteren Schaftendes in einem vertikal zur Schaftachse (Y-Y') verlaufenden Durchströmungskanal (3) angeordnet ist.

8. Messgerät nach einem der vorangehenden Ansprüche, **dadurch gekennzeichnet, daß** der den Durchströmungskanal (3) aufnehmende Schaftbereich (22') um die Schaftachse (Y-Y') drehbar gelagert ist.

9. Messgerät nach einem der vorangehenden Ansprüche, **dadurch gekennzeichnet, daß** das Sensorelement (31, 32) als Thermoelement (32) ausgebildet ist.

10. Messgerät nach einem der vorangehenden Ansprüche, **dadurch gekennzeichnet, daß** der Schaft (2) zum Abklappen des wenigstens einen Schaftabschnitts (22) ein zweites Gelenk (6) aufweist, das ein erstes und zweites Scharnier (61A, 62A, 64A, 66A, 67A, 68A, 61B, 63, 62B, 64B, 66B, 67B, 68B) aufweist, die einen gemeinsamen in axialer Richtung verlaufenden Scharniersteg (63) aufweisen.

11. Messgerät nach Anspruch 10, **dadurch gekennzeichnet, daß** die Scharniere jeweils um maximal 90° abklappbar sind.

12. Messgerät nach Anspruch 10 oder 11, **dadurch gekennzeichnet, daß** die Scharniere jeweils einen Rastmechanismus (62A, 64A; 62B, 64B) zum Einrasten des Scharniers in 0°- und 90°-Winkelstellung aufweisen.

13. Messgerät nach einem der vorangehenden Ansprüche, **dadurch gekennzeichnet, daß** die thermisch oder elektrisch leitende Verbindung eine Leitungsverbindung ist, die durch die Gelenkachse (D-D', E-E') der ersten und zweiten Scharniere verläuft.

14. Messgerät nach einem der vorangehenden Ansprüche, **dadurch gekennzeichnet, daß** der Schaft (2) im Bereich des Sensorelements (31, 32) eine um die Schaftachse drehbare Schutzhülse (4) mit diametral gegenüberliegenden Öffnungen (41) für den Durchströmungskanal (3) aufweist.

## Claims

1. A measuring instrument comprising a shaft (2), which houses a sensor element (31, 32), and a display and/or operating unit (1), which is disposed on an upper end of the shaft, is in thermally or electrically conduct which is pivotably supported with respect to the shaft (2),
**characterised in that** the shaft (2) comprises at least one retractable shaft portion (22).

2. A measuring instrument according to Claim 1,
**characterised in that** a battery compartment (29) is integrated into the shaft (2).

3. A measuring instrument according to Claim 2,
**characterised in that** the battery compartment (29) comprises a feed opening (30) accessible from a frontal direction of the shaft.

4. A measuring instrument according to Claim 2 or 3,
**characterised in that** a shaft region (23) adjacent to the battery compartment (29) is releasbly connected to the shaft region (21) housing the battery compartment (20) in order to uncover the feed opening (30) when the connection is released.

5. A measuring instrument according to Claim 4,
**characterised in that** the releasable connection is constructed as a bayonet catch (7, 71, 26; 81).

6. A measuring instrument according to one of the preceding Claims,
**characterised in that** the display and/or operating unit (1) is pivotably supported by means of a first articulated joint (5), which comprises a detent mechanism (1, 52, 54) only allowing predetermined angular positions of the display and/or control unit (1) with respect to the shaft (2).

7. A measuring instrument according to one of the preceding Claims,
**characterised in that** the sensor element (31, 32) is designed as a hot-wire element (31) and is disposed in the vicinity of the lower shaft end in a flow duct (3) running vertically to the shaft axis (Y-Y').

8. A measuring instrument according to one of the preceding Claims,
**characterised in that** the shaft region (22') housing the flow duct (3) is mounted to pivot around the shaft axis (Y-Y').

9. A measuring instrument according to one of the preceding Claims,
**characterised in that** the sensor element (31, 32) is constructed as a thermocouple (32).

10. A measuring instrument according to one of the preceding Claims,
**characterised in that** for the retraction of the at least one shaft portion (22) the shaft (2) comprises a second articulated joint (6), which comprises a first and a second hinge (61A, 62A, 64A, 66A, 67A, 68A, 61B, 63, 62B, 64B, 66B, 67B, 68B), which have a common hinge web (63) running in the axial direction.

11. A measuring instrument according to Claim 10,
**characterised in that** each of the hinges can be rotated by at most 90°.

12. A measuring instrument according to Claim 10 or 11,
**characterised in**to that each of the hinges comprises a detent mechanism (62A, 64A; 62B, 64B) for locking the hinge in an angular position of 0° and 90°.

13. A measuring instrument according to one of the preceding Claims,
**characterised in that** the thermally or electrically conductive connection is a wire connection which passes through the pivot axis (D-D', E-E') of the first and second hinges.

14. A measuring instrument according to one of the preceding Claims,
**characterised in that** in the vicinity of the sensor element (31, 32) the shaft (2) comprises a protective sleeve (4) rotatable around the shaft axis and having diametrically opposite apertures (41) for the flow duct (3).

## Revendications

1. Appareil de mesure comprenant une tige (2) qui reçoit un élément de détection (31, 32), et une unité d'affichage et/ou de commande (1) disposée au niveau d'une extrémité supérieure de la tige (2), qui est en liaison conductrice d'électricité ou de chaleur avec l'élément de détection (31, 32), et qui est logée de façon mobile par rapport à la tige (2),
**caractérisé en ce que**
la tige (2) présente au moins un segment de tige, rabattable (22).

2. Appareil de mesure selon la revendication 1,
**caractérisé en ce qu'**
un compartiment batterie (29) est intégré dans la tige (2).

3. Appareil de mesure selon la revendication 2,
**caractérisé en ce que**
le compartiment batterie (29) présente une ouverture d'arrivée (30) accessible à partir d'une direction frontale de la tige.

4. Appareil de mesure selon la revendication 2 ou 3,
**caractérisé en ce qu'**
une zone de la tige (23) rattachée au compartiment batterie (29) est reliée de façon amovible au segment de la tige (21) recevant le compartiment batterie (29), afin de dégager l'ouverture d'arrivée (30) lorsque la liaison est défaite.

5. Appareil de mesure selon la revendication 4,
**caractérisé en ce que**
la liaison amovible est en forme de fermeture à baïonnette (7, 71, 26 ; 81).

6. Appareil de mesure selon l'une des revendications précédentes,
**caractérisé en ce que**
l'unité d'affichage et/ou de commande (1) est logée de façon pivotante au moyen d'une première articulation (5) ayant un mécanisme d'accrochage (51, 52, 54) qui autorise uniquement des positions angulaires prédéterminées de l'unité d'affichage et/ou de commande (1) par rapport à la tige (2).

7. Appareil de mesure selon l'une des revendications précédentes,
**caractérisé en ce que**
l'élément de détection (31, 32) est un élément à fil chauffant (31) disposé dans la zone de l'extrémité inférieure de la tige, dans un canal d'écoulement (3) vertical par rapport à l'axe de la tige (Y-Y').

8. Appareil de mesure selon l'une des revendications précédentes,
**caractérisé en ce que**
le segment de la tige (22') recevant le canal d'écoulement (3) peut tourner autour de l'axe de la tige (Y-Y').

9. Appareil de mesure selon l'une des revendications précédentes,
**caractérisé en ce que**
l'élément de détection (31, 32) est un élément thermique (32).

10. Appareil de mesure selon l'une des revendications précédentes,
**caractérisé en ce que**
la tige (2) présente, pour rabattre au moins un segment de tige (22), une deuxième articulation (6) qui présente une première et une deuxième charnières (61A, 62A, 64A, 66A, 67A 68A, 61B, 63, 62B, 64B, 66B, 67B, 68B), qui présentent une traverse de charnière commune (63) dans la direction axiale.

11. Appareil de mesure selon la revendication 10,
**caractérisé en ce que**
les charnières sont respectivement rabattables à 90° au maximum.

12. Appareil de mesure selon la revendication 10 ou 11,
**caractérisé en ce que**
les charnières présentent respectivement un mécanisme d'accrochage (62A, 64A ; 62B, 64B) pour l'enclenchement de la charnière dans la position angulaire 0° et 90°.

13. Appareil de mesure selon l'une des revendications précédentes,
**caractérisé en ce que**
la liaison conductrice d'électricité ou de chaleur est une liaison par ligne, qui s'étend à travers l'axe d'articulation (D-D', E-E') de la première et de la deuxième charnière.

14. Appareil de mesure selon l'une des revendications précédentes,
**caractérisé en ce que**
la tige (2) présente dans la zone de l'élément de détection (31, 32) une douille de protection (4) rotative autour de l'axe de la tige avec des ouvertures diamétralement opposées (41) pour le canal d'écoulement (3).
